# EUROPEAN PATENT SPECIFICATION

(11) **EP 1 686 248 B1**
(45) Date of publication and mention of the grant of the patent: **30.07.2008**
(21) Application number: 06001555.9
(22) Date of filing: 25.01.2006
(51) Int. Cl.: F01N 7/18, F16L 31/00

(54) **Construction of coupling exhaust pipes of vehicle**
Kupplungsvorrichtung für Abgsrohre eines Fahrzeuges
Raccord de tuyaux d'échappement d'un véhicule

(30) Priority: 27.01.2005 JP 2005019306; 25.07.2005 JP 2005213725
(43) Date of publication of application: 02.08.2006
(73) Proprietor: Nakagawa Sangyo Co., Ltd., Nishikasugai-gun Aichi-ken (JP)
(72) Inventor: Nakagawa, Yukihiro c/o Nakagawa Sangyo Co., Ltd., Nishikasugai-gun Aichi-ken (JP)
(74) Representative: Kramer - Barske - Schmidtchen

(56) References cited:
- DE-A1- 10 204 261
- DE-C- 868 542
- GB-A- 191 110 120
- US-A- 5 454 604
- US-B1- 6 508 491

## Description

The present invention relates to an assembly of coupled exhaust pipes of a vehicle and in preferred embodiments to a coupling construction, having a smaller number of parts, which is capable of coupling exhaust pipes to each other without welding the exhaust pipes to each other.

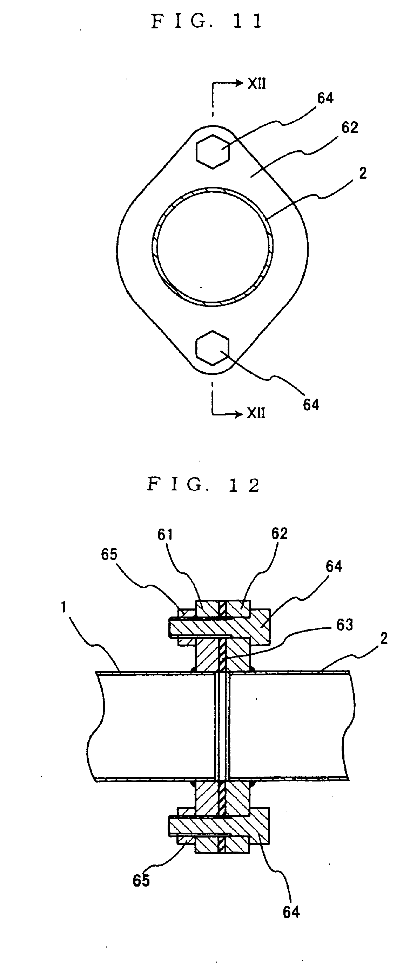

Figs. 11 and 12 show an example of conventional constructions of coupled exhaust pipes. With reference to Fig. 12, approximately rhombic (see Fig. 11) coupling flanges 61 and 62 are welded to the periphery of an end of an upstream-side exhaust pipe 1 and to the periphery of a downstream-side exhaust pipe 2, respectively. The upstream-side exhaust pipe 1 and the downstream-side exhaust pipe 2 are coupled to each other by coupling the coupling flanges 61 and 62 to each other with a bolt 64 and a nut 65 through a gasket 63 disposedbetween the coupling flanges 61 and 62 (first conventional example).

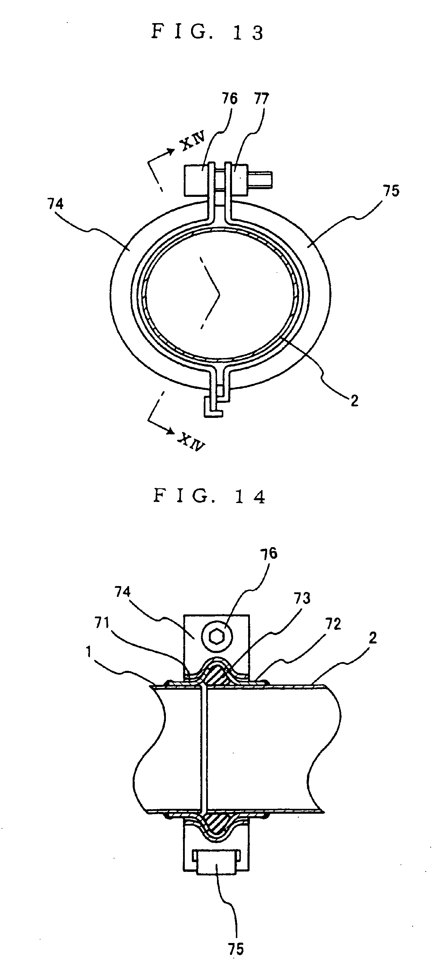

Fig. 13 and 14 show another example of the conventional constructions of coupled exhaust pipes. With reference to Fig. 14, one side of locking rings 71, 72 formed in a shape similar to the letter "V" in section is welded to the entire periphery of an end of an upstream-side exhaust pipe 1 and the entire periphery of a downstream-side exhaust pipe 2, respectively. The upstream-side exhaust pipe 1 and the downstream-side exhaust pipe 2 are coupled to each other by fitting a pair of sandwiching bands 74, 75 on the locking rings 71, 72 respectively, with a ring-shapedpacking 73 interposed between the other side of the locking ring 71 and the other side of the locking ring 72 disposed symmetrically with respect to the locking ring 71. Each of the sandwiching bands 74, 75 is formed by shaping a belt-shaped plate into a semicircle mountain-shape in section (see Fig. 13). One end of each of the sandwiching band 74 and the sandwiching band 75 is rotatably locked to the other. After the sandwiching bands 74, 75 are fitted on the locking rings 71, 72 respectively, the other ends of the sandwiching bands 74, 75 are coupled to each other with a bolt 76 and a nut 77 (second conventional example).

In the construction of coupled exhaust pipes disclosed in Japanese Patent Application Laid-Open No. 2002-227643, after the clamping fitting is mounted on one of the exhaust pipes, and another clamping fitting is mounted on the other exhaust pipe fitted in the one exhaust pipe, both exhaust pipes are coupled to each other by tightening the clamping fittings with a bolt and a nut.

In the above-described conventional constructions of coupled exhaust pipes, it is necessary to weld the coupling flanges 61, 62 of the first conventional example to the periphery of the end of the exhaust pipes 1, 2, respectively. It is alsonecessary to weld the locking rings 71, 72 of the second conventional example to the periphery of the end of the exhaust pipes 1, 2 respectively. Therefore each of the above-described constructions has a problem that stress concentrates on the welded portion and thus the exhaust pipes 1, 2 are liable to crack owing to vibrations of the vehicle body and that time and labor are required in the welding process. The first conventional example has another problem that when the face pressure is increased to prevent leakage of gas from the gasket 63, it is necessary to set the thickness of the coupling flanges 61 and 62 to as thick as 10 to 12mm. Hence the weight and cost of the coupling construction increase. The second conventional example has another problem that many component parts are used for the coupling construction.

GB 10,120, which forms the basis for the preamble of the appended claim 1, discloses a pipe coupling having a beaded edge formed by the doubled-over edge of a first pipe. The beaded edge is provided with a projection that engages in a recess of the beaded edge of a second pipe, which recess is formed by the inner edge of the double bead of the second pipe. The first and second pipes are mechanically coupled using a bolt and nut that squeeze the two beaded edges together without penetrating the beaded edges.

DE 102 04 261 A1 discloses a flange coupling of two pipes of an automobile exhaust system, in which a clamping device axially clamps the flanges together.

It is an object of the present invention to provide an improved assembly of coupled pipes that is capable of being joined more strongly with each other.

This object is achieved by the assembly of coupled pipes according to claim 1.

It is also an obj ect of the present invention to provide an improved technique for manufacturing the assembly of coupled pipes according to claim 1.

This object is achieved by the manufacturing method of claim 5.

Further embodiments of the invention are recited in the dependent claims.

In a manufacturing embodiment, a flange portion (84, 94) is formed by crushing in a longitudinal direction of a pipe (8, 9) at least one of adjacent bulged portions (82, 92, 92A, 92B) formed by bulging the pipe (8, 9) radially outward at an intermediate position of the pipe (8, 9) spaced at a predetermined interval from an opening (81, 91) of the pipe (8, 9) in such a way as to superimpose both slopes (821, 822; 921, 922) of each of the sectionally mountain-shaped bulgedportions (82, 92, 92A, 92B) on each other. In the manufacturing embodiment, the pipe at the intermediate position thereof spaced at the predetermined interval from the opening is projected. Therefore the wall of the pipe between the opening and the base of the mountain at the side of the opening is supplied to the bulged portion owing to the increase of the diameter of the intermediate position of the pipe. Thus it is possible to prevent the thickness of the bulged portion frombecomingexcessivelythin. Consequently it is possible to shape the bulged portion and the flange portion, with the bulged portion and the flange portion keeping a sufficient thickness.

The reference letters and numerals in the above-described parentheses correspond to the means that will be described later in the embodiments respectively.

As is apparent from the foregoing description, the assembly of coupled exhaust pipes of a vehicle does not have a fear of breakage even though a vehicle body vibrates, does not cause an increase in the weight and cost thereof, and the number of component parts, and can be manufactured easily.
Fig. 1 is a cross-sectional view showing coupled exhaust pipes of a vehicle in a first embodiment of the present invention.
Fig. 2 is a vertical sectional view taken along a line II-II of Fig. 1.
Fig. 3 is a vertical sectional view taken along a line III-III of Fig. 1.
Fig. 4 is a cross-sectional view showing coupled exhaust pipes of a vehicle in a second embodiment, which does not form part of the present invention.
Fig. 5 is a vertical sectional view taken along a line V-V of Fig. 4.
Fig. 6 is a vertical sectional view taken along a line VI-VI of Fig. 4.
Fig. 7 is a sectional view showing a process of manufacturing a flange portion in a third embodiment of the present invention.
Fig. 8 is a sectional view showing a process of manufacturing a flange portion in a fourth embodiment of the present invention.
Fig. 9 is a perspective view and a sectional view showing a process of manufacturing a flange portion in a fifth embodiment of the present invention.
Fig. 10 is a perspective view and a sectional view showing a process of manufacturing a flange portion in a sixth embodiment of the present invention.
Fig. 11 is a cross-sectional view showing exhaust pipes of a vehicle coupled to each other with a conventional coupling construction.
Fig. 12 is a vertical sectional view taken along a line XII-XII of Fig. 11.
Fig. 13 is a cross-sectional view showing exhaust pipes of a vehicle coupled to each other with another conventional coupling construction.
Fig. 14 is a vertical sectional view taken along a line XIV-XIV of Fig. 13.

### First Embodiment

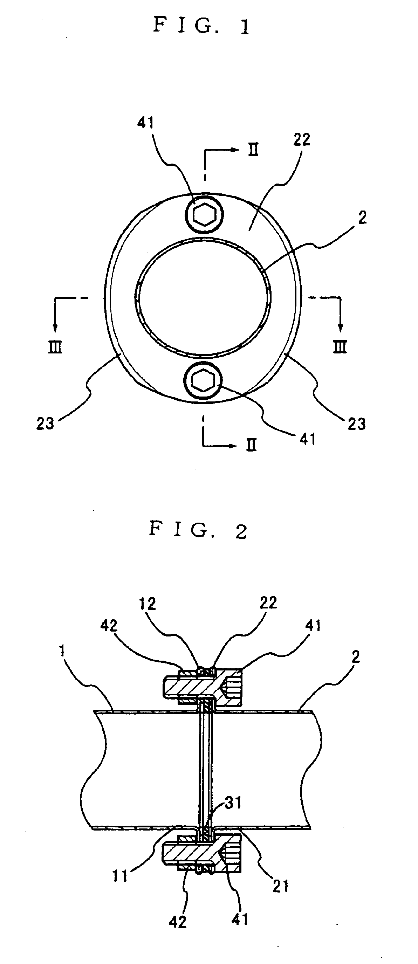

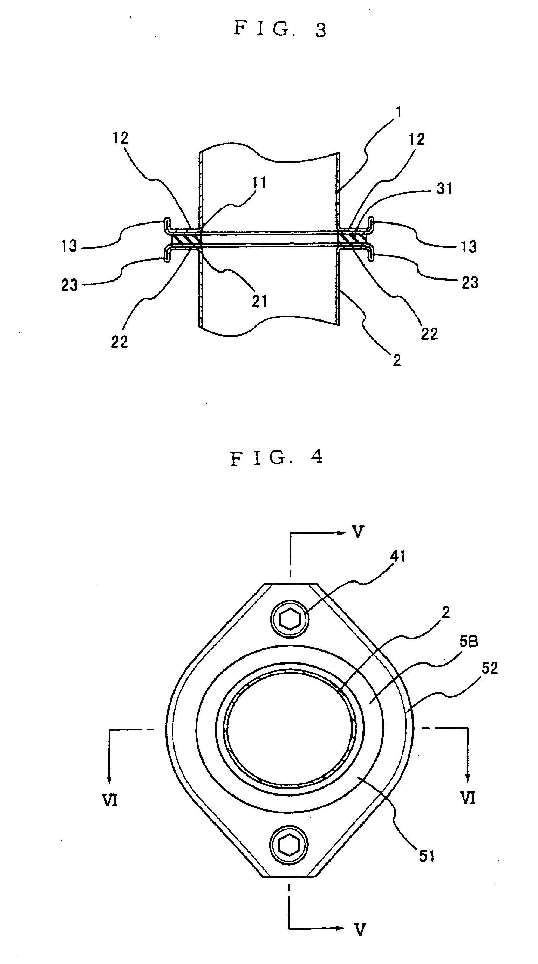

Figs. 1 through 3 show an example of the coupling construction of the present invention. Fig. 1 is a cross-sectional view showing coupled exhaust pipes of a vehicle. Figs. 2 and 3 are a vertical sectional views taken along line II-II of Fig. 1 and line III-III of Fig. 1, respectively. As shown in Figs. 2 and 3, an upstream-side exhaust pipe 1 and a downstream-side exhaust pipe 2 are disposed at predetermined positions, with edges 11 and 21 of openings thereof opposed to each other. Each of the upstream-side exhaust pipe 1 and the downstream-side exhaust pipe 2 has a thickness of 1.2 to 1. 5mm. The edges 11, 21 of the openings of the upstream-side exhaust pipe 1 and the downstream-side exhaust pipe 2 are bent radially outward by molding and thereafter folded back radially inward to form flange portions 12 and 22 having a predetermined width on the circumference of each of the openings respectively. The flange portions 12, 22 are butted to each other through a gasket 31 disposed therebetween and coupled to each other with a bolt 41 and a nut 42 at radially symmetrical positions (see Fig. 1). The upstream-side exhaust pipe 1 and the downstream-side exhaust pipe 2 are coupled to each other in this manner. The peripheral edges of the flange portions 12, 22 are bent substantially perpendicularly (see Fig. 3) at a height of 7 to 8mm except bolt-penetrated portions of the flange portions 12, 22 to form the peripheral edges thereof as reinforcing ribs 13, 23 respectively. Thereby the face pressure of the gasket 31 is securely obtained.

In the first embodiment, the coupling construction does not have a portion to be welded unlike the conventional coupling construction. Further the coupling construction can be prevented from cracking because stress does not concentrate of a welded portion. In addition, time and labor can be saved because it is unnecessary to perform a welding process. Further, because it is unnecessary to use thick coupling flanges to obtain a face pressure necessary for preventing leakage of gas, it is possible to prevent an increase in the weight of the coupling construction and the cost thereof. Furthermore, because the flange portions 12, 22 are formed by bending the opening edges 11, 21 of the upstream-side exhaust pipe 1 and the downstream-side exhaust pipe 2 respectively, it is possible to use a smaller number of parts for the coupling construction of the present invention than for the conventional coupling construction in which the coupling flanges 61, 62 (see Fig. 12) are welded to the upstream-side exhaust pipe 1 and the downstream-side exhaust pipe 2 respectively.

### Second Embodiment

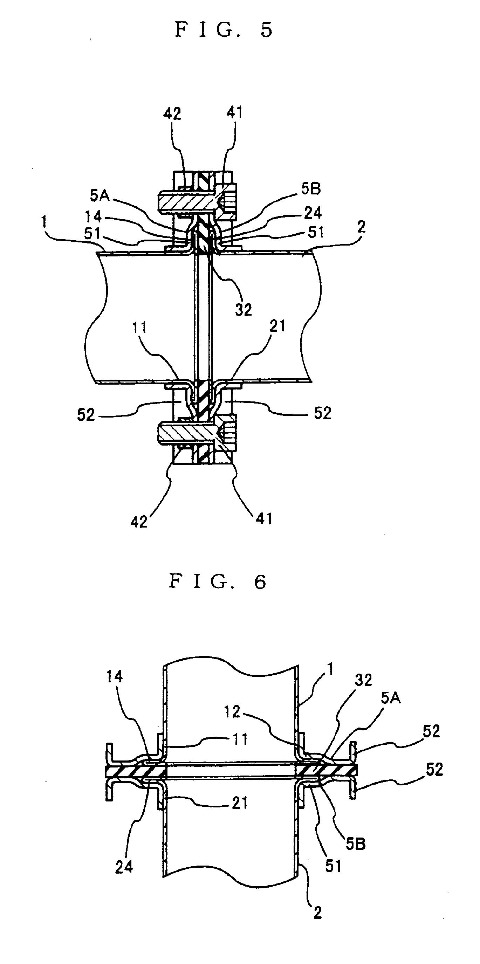

Figs. 4 through 6 show another example of the coupling construction, which does not form part of the present invention. Fig. 4 is a cross-sectional view showing coupled exhaust pipes of a vehicle. Figs. 5 and 6 are vertical sectional views taken along line V-V of Fig. 4 and line VI-VI of Fig. 4 respectively. In this example, an upstream-side exhaust pipe 1 and a downstream-side exhaust pipe 2 are disposed at predetermined positions, with edges 11 and 21 of openings thereof opposed to each other. Each of the upstream-side exhaust pipe 1 and the downstream-side exhaust pipe 2 has a thickness of 1.2 to 1.5mm. The edges 11, 21 of the openings of the upstream-side exhaustpipe 1 and the downstream-side exhaust pipe 2 are bent radially outward by molding and thereafter folded back radially inward to form flange portions 14 and 24 having a predetermined width on the circumference of each of the openings thereof respectively. The flange portions 14 and 24 are butted to each other through a large-diameter gasket 32 disposed therebetween. A peripheral portion of the gasket 32 projects radially outward beyond the periphery of the flange portions 14 and 24. Sandwiching rings 5A, 5B movably fitted on the periphery of the upstream exhaust pipe 1 and the downstream exhaust pipe 2 contact the half of the peripheral portion of the gasket 32 respectively. It is possible to make the width of the flange portions 14, 24 of the second embodiment smaller than that of the flange portions 12, 22 of the first embodiment. Therefore it is possible to reduce burden in a molding operation.

Inner peripheral portions 51 of the sandwiching rings 5A, 5B are sectionally curvedly disposed along outer surfaces of the flange portions 14, 24 in the direction in which the flange portions 14, 24 of the upstream exhaust pipe 1 and the downstream exhaust pipe 2 are opposed to each other, with the inner peripheral portions 51 of the sandwiching rings 5A, 5B in contact with the outer surfaces of the flange portions 14, 24. The peripheral portions of the sandwiching rings 5A, 5B are opposed to each other, with the gasket 32sandwichedtherebetween. The sandwiching rings 5A, 5B are coupled to each other at symmetrical positions (see Fig. 4), with bolts 41 and nuts 42. In this manner, the upstream exhaust pipe 1 and the downstream exhaust pipe 2 are coupled to each other. The peripheral edges of the sandwiching rings 5A, 5B are bent substantially perpendicularly (see Fig. 6) at a height of 7 to 8mm except bolt-penetrated portions thereof to form the peripheral edges thereof as reinforcing ribs 52, 52 respectively. Thereby the face pressure of the gasket 31 is securely obtained.

The coupling construction of this example does not have a portion to be welded unlike the conventional coupling construction. Further the coupling construction can be prevented from cracking because a stress does not concentrate on a welded portion. In addition, time and labor can be saved because it is unnecessary to perform a welding process. Further because thick coupling flanges are not required to obtain a face pressure necessary for preventing leak of gas, it is possible to prevent an increase in the weight of the coupling construction and the cost thereof. Furthermore because the flange portions 14, 24 are formed by bending the edges 11, 21 of the openings of the upstream-side exhaust pipe 1 and the downstream-side exhaust pipe 2 respectively, it is possible to use a smaller number of parts for this coupling construction than for the conventional coupling construction in which the coupling flanges 71, 72 (see Fig. 14) are welded to the upstream-side exhaust pipe 1 and the downstream-side exhaust pipe 2 respectively.

### Third Embodiment

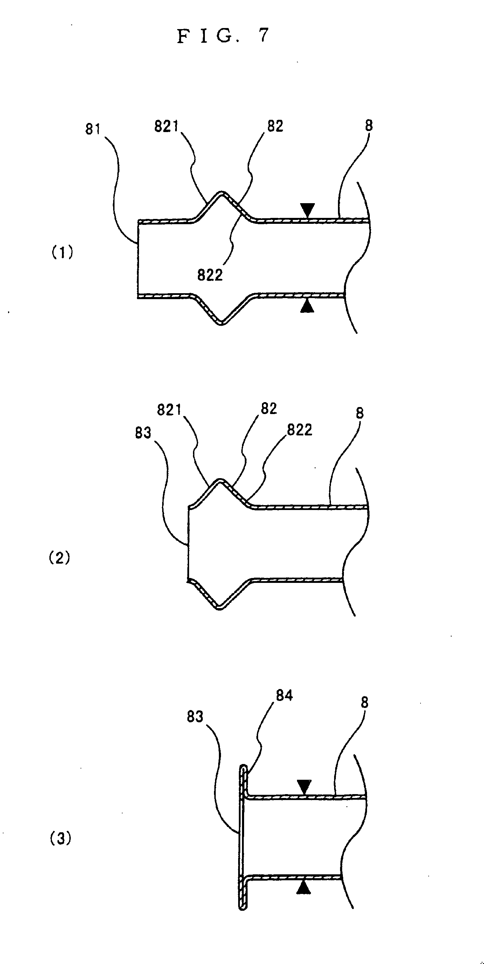

Fig. 7 shows another method of forming a flange portion on the circumference of an opening of an exhaust pipe. With the peripheral portion of a pipe 8 shown with triangles of Fig. 7(1) clamped by an appropriate means, the diameter of the pipe 8 at an intermediate position thereof spaced at a predetermined interval from an opening 81 is increased so that the intermediate portion of the pipe 8 is mountain-shaped in section by beading processing. Thereby a bulged portion 82 is formed on the pipe 8. The triangles in each of the following embodiments show the peripheral portion of the pipe clamped by an appropriate means. Because the diameter of the pipe 8 at the intermediate position thereof spaced at the predetermined interval from the opening 81 is increased, the wall of the pipe 8 between the opening 81 and the base of the mountain at the side of the opening 81 is supplied to the bulged portion 82 owing to the increase of the diameter of the intermediate position of the pipe 8. Thus it is possible to prevent the thickness of the bulged portion 82 from becoming excessively thin. Thereafter the pipe 8 is cut at the position of the base of the sectionally mountain-shaped bulged portion 82 at the side of the opening 81 to form an opening 83 (see Fig. 7(2)). Thereafter a slope 821 at the side of the opening 83 with respect to the apex of the sectionally mountain-shaped bulged portion 82 is crushingly pressed against a slope 822 disposed at the other side by means of press molding (see Fig. 7(3)). Thereby a flange portions 84 is formed erectly, on the circumference of the opening 83.

### Fourth Embodiment

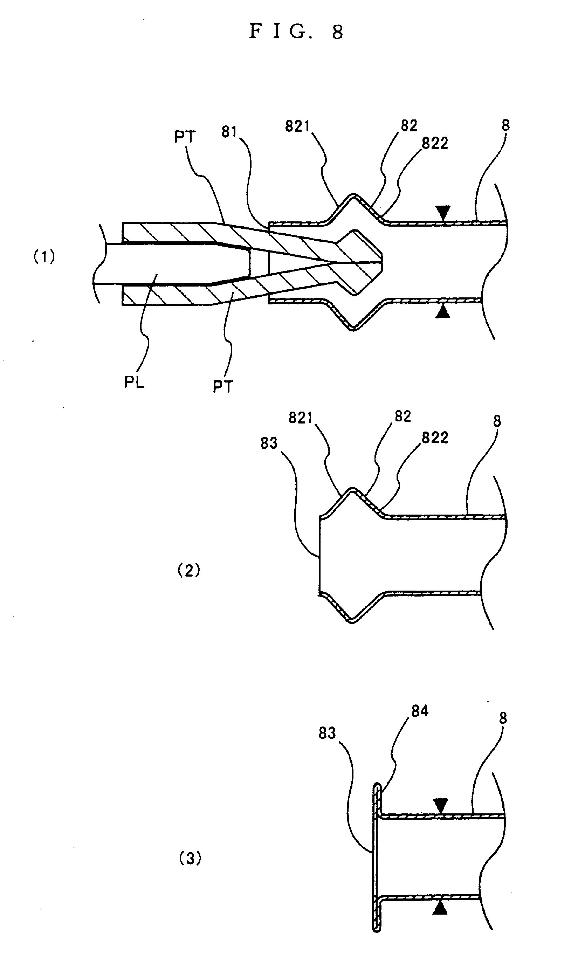

Fig. 8 shows still another method of forming a flange portion on the circumference of an opening of an exhaust pipe. With the peripheral portion of a pipe 8 shown with triangles of Fig. 8(1) clamped by an appropriate means, a plurality of punches PT are inserted into an intermediate position inside the pipe 8 spaced at a predetermined interval from an opening 81. That is, the diameter of the pipe 8 at the intermediate position inside the pipe 8 is increased so that the intermediate portion of the pipe 8 is approximately mountain-shapedin section. Thereby a bulged portion 82 is formed on the pipe 8. Thereafter the pipe 8 is cut at the position of the base of the sectionally mountain-shaped bulged portion 82 at the side of the opening 81 to form an opening 83 (see Fig. 8(2)). Thereafter a slope 821 at the side of the opening 83 with respect to the apex of the sectionally mountain-shaped bulged portion 82 is crushingly pressed against a slope 822 disposed at the other side by means of press molding (see Fig. 8(3)). Thereby a flange portions 84 is formed erectly on the circumference of the opening 83. The method of the fourth embodiment is also capable of preventing the bulged portion 82 from becoming excessively thin like the method of the third embodiment. The bulged portion 82 may be formed by a hydraulic bulging processing.

### Fifth Embodiment

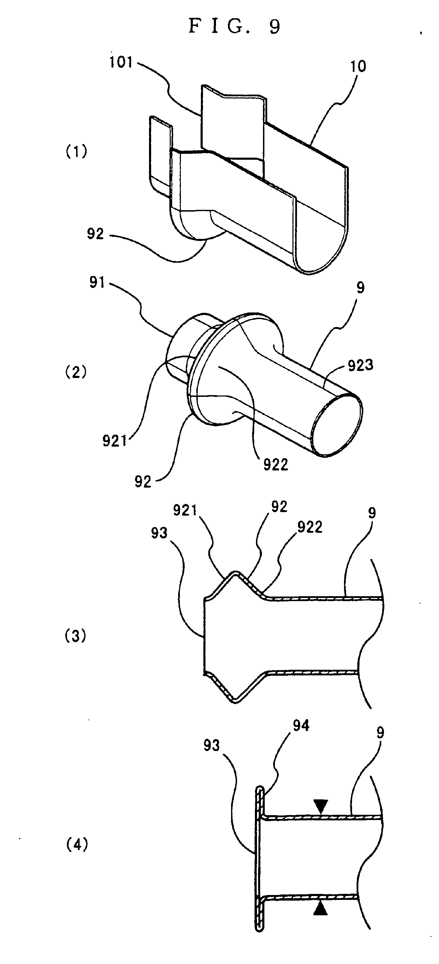

Fig. 9 shows still another method of forming a flange portion on the circumference of an opening of an exhaust pipe. Initially as shown in Fig. 9(1), a metal plate 10 is formed into the shape of an approximately U in section by press working. At this time, the metal plate 10 is deformed outward at an intermediate position thereof spaced at a predetermined interval from one end surface 101 so that an intermediate portion is approximately mountain-shaped in section to form a bulged portion 92. After the metal plate 10 is shaped cylindrically by press molding (see Fig. 9(2)), butted ends 923 of the metal plate 10 extending in the longitudinal direction thereof are welded to each other to form a pipe 9 having the bulged portion 92 disposed at an intermediate position spaced at a predetermined interval from an opening 91. Stray current corrosion does not take place in the welding in this case, because metals to be welded are of the same kind. Thereafter the pipe 9 is cut at the base of the sectionally mountain-shaped bulged portion 92 at the side of the opening 91 thereof to form an opening 93 (see Fig. 9(3)). A slope 921 at the side of the opening 93 with respect to the apex of the sectionally mountain-shaped bulged portion 92 is crushingly pressed against a slope 922 disposed at the other side by means of press molding (see Fig. 9(4)). Thereby a flange portions 94 is formed erectly on the circumference of the opening 93. The fifth embodiment is suitable for manufacturing a flange portion-provided exhaust pipe having a large diameter.

### Sixth Embodiment

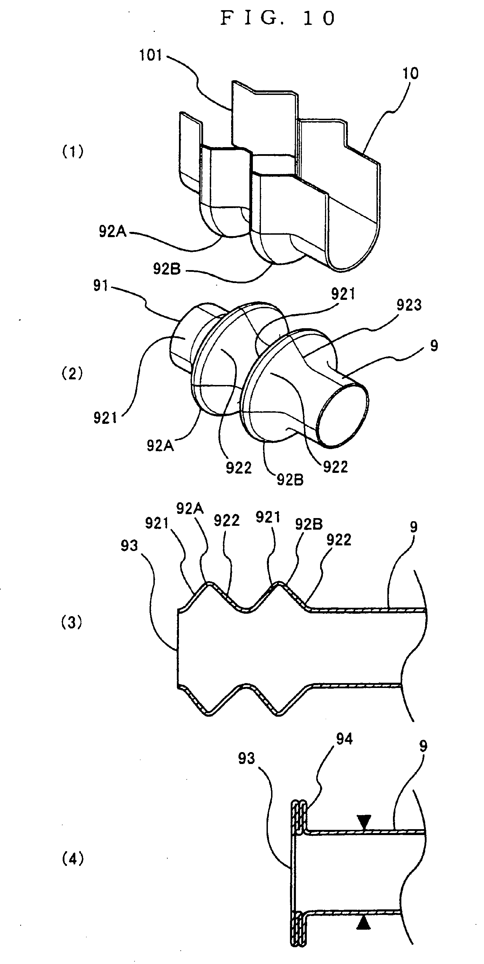

Fig. 10 shows still another method of forming a flange portion on the circumference of an opening of an exhaust pipe. As shown in Fig. 10(1), a metal plate 10 is formed into the shape of an approximately U in section by press working. At this time, the metal plate 10 is deformed bulgingly outward at intermediate two positions, longitudinally adjacent to each other, which are spaced at a predetermined interval respectively from one end surface 101 so that the intermediate position is approximately mountain-shaped in section to form bulged portions 92A, 92B. After the metal plate 10 is shaped cylindrically by press molding (see Fig. 10 (2)), butted ends 923 of the metal plate 10 extending in the longitudinal direction thereof are welded to each other to form a pipe 9 having the bulged portions 92A, 92B located at positions spaced at a predetermined interval respectively from an opening 91. Thereafter the pipe 9 is cut at the base of the sectionally mountain-shaped bulged portion 92A at the side of the opening 91 thereof to form an opening 93 (see Fig. 10(3)). Slopes 921 at the side of the opening 93 with respect to the apex of the sectionally mountain-shaped bulged portions 92A, 92B are crushingly pressed against slopes 922 disposed at the other side with respect to the apex of the bulged portions 92A, 92B by means of press molding (see Fig. 10(4)). Thereby a flange portion 94 is formed erectly on the circumference of the opening 93. The method of the sixth embodiment is suitable for manufacturing a flange portion-provided exhaust pipe having a large diameter and allows the flange portion 94 to have a large thickness. When a flange is formed by forming not less than three bulged portions and by crushing pressing bulged portions against slopes, the flange portion is allowed to have a large thickness.

## Claims

1. An assembly of coupled exhaust pipes (1, 2) of a vehicle, comprising:
radially outward bent flange portions (12, 22) respectively formed on an opening edge (11) of an upstream-side exhaust pipe (1) and on an opposing opening edge (21) of a downstream-side exhaust pipe (2);
a sealing member (31) disposed between said flange portions, which are abutted against each other through the sealing member (31); and
wherein said flange portions are mechanically coupled to each other by means of coupling members (41, 42) comprising a bolt (41) and a nut (42);
**characterized in that**:
the bolt (41) penetrates through said flange portions (12, 22), and
peripheral edges of the flange portions are bent substantially perpendicularly to form reinforcing ribs (13, 23).

2. An assembly according to claim 1, wherein the flange portions (12, 22) have a height of 7 to 8 mm.

3. An assembly according to claim 1 or 2, wherein the pipes (1, 2) have a thickness of 1.2 to 1.5 mm.

4. An assembly according to any preceding claim, wherein the flange portions (12, 22) are coupled to each other with bolts (41) and nuts (42) at radially symmetrical positions.

5. A method for manufacturing the assembly according to any preceding claim, wherein each said flange portion (12, 22; 84; 94) is formed by at least once radially outward bending said opening edges (11, 21) and thereafter radially inward bending said opening edges.

6. The method according to claim 5, wherein each said flange portion (12, 22; 84; 94) is formed by:
bulging said pipe (1, 2; 8; 9) radially outward at an intermediate position of said pipe spaced at a predetermined interval from an opening (81; 91) of said pipe, thereby forming at least one bulged portion (82; 92; 92A, 92B) having a peak-shape in cross-section; and
crushing the at least one bulged portion in the longitudinal direction of the pipe in such a way as to superimpose both slopes (821, 822; 921, 922) of each bulged portion onto each other.

## Patentansprüche

1. Baugruppe verbundener Abgasrohre (1, 2) eines Fahrzeugs, enthaltend:
radial nach außen gebogene Flanschbereiche (12, 22), die jeweils an einem Öffnungsrand (11) eines stromaufwärtsseitigen Abgasrohres (1) und an einem gegenüberliegenden Öffnungsrand (21) eines stromabwärtsseitigen Abgasrohres (2) ausgebildet sind;
ein Dichtungselement (31), das zwischen den Flanschbereichen, die durch das Dichtungselement (31) aneinander anliegend sind, angeordnet ist; und
wobei die Flanschbereiche durch Verbindungselemente (41, 42), die eine Schraube (41) und eine Mutter (42) enthalten, mechanisch miteinander verbunden sind;
**dadurch gekennzeichnet, dass**:
die Schraube (41) durch die Flanschbereiche (12, 22) hindurchdringt, und Umfangsränder der Flanschbereiche zur Bildung von Versteifungsrippen (13, 23) im Wesentlichen senkrecht abgebogen sind.

2. Baugruppe nach Anspruch 1, wobei die Flanschbereiche (12, 22) eine Höhe von 7 bis 8 mm aufweisen.

3. Baugruppe nach Anspruch 1 oder 2, wobei die Rohre (1, 2) eine Dicke von 1,2 bis 1,5 mm aufweisen.

4. Baugruppe nach einem der vorhergehenden Ansprüche, wobei die Flanschbereiche (12, 22) miteinander mit Schrauben (41) und Muttern (42) in radialsymmetrischen Positionen verbunden sind.

5. Verfahren zur Herstellung der Baugruppe nach einem der vorhergehenden Ansprüche, wobei jeder Flanschbereich (12, 22; 84; 94) durch wenigstens einmaliges radiales Biegen der Öffnungsränder (11, 21) nach außen und danach radiales Biegen der Öffnungsränder nach innen ausgebildet wird.

6. Verfahren nach Anspruch 5, wobei jeder Flanschbereich (12, 22; 84; 94) gebildet wird durch:
Aufweiten des Rohres (1, 2; 8; 9) radial nach außen an einer Zwischenposition des Rohres, die in einem vorbestimmten Abstand von einer Öffnung (81; 91) des Rohres angeordnet ist, wodurch wenigstens ein aufgeweiteter Bereich (82; 92; 92A, 92B) gebildet wird, der im Querschnitt eine Scheitelform aufweist;
Quetschen des wenigstens einen aufgeweiteten Bereichs in der Längsrichtung des Rohres derart, dass beide Flanken (821, 822; 921, 922) jedes aufgeweiteten Bereichs aufeinander liegen.

## Revendications

1. Ensemble de tuyaux d'échappement couplés (1, 2) d'un véhicule, comprenant :
des parties de bride fléchies radialement vers l'extérieur (12, 22) respectivement formées sur un bord d'ouverture (11) d'un tuyau d'échappement côté amont (1) et sur un bord d'ouverture opposé (21) d'un tuyau d'échappement côté aval (2) ;
un élément d'étanchéité (31) disposé entre lesdites parties de bride, qui sont en butée l'une contre l'autre par l'intermédiaire de l'élément d'étanchéité (31) ; et
dans lequel lesdites parties de bride sont couplées mécaniquement l'une à l'autre au moyen d'éléments de couplage (41, 42) comprenant un boulon (41) et un écrou (42) ;
**caractérisé en ce que** :
le boulon (41) pénètre à travers lesdites parties de bride (12, 22), et
les bords périphériques des parties de bride sont fléchis sensiblement perpendiculairement aux nervures de renforcement (13, 23).

2. Ensemble selon la revendication 1, dans lequel les parties de bride (12, 22) présentent une hauteur de 7 à 8 mm.

3. Ensemble selon la revendication 1 ou 2, dans lequel les tuyaux (1, 2) présentent une épaisseur de 1,2 à 1,5 mm.

4. Ensemble selon l'une quelconque des revendications précédentes, dans lequel les parties de bride (12, 22) sont couplées l'une à l'autre par des boulons (41) et des écrous (42) en des positions radialement symétriques.

5. Procédé de fabrication de l'ensemble selon l'une quelconque des revendications précédentes, dans lequel chaque dite partie de bride (12, 22 ; 84 ; 94) est formée en fléchissant au moins une fois radialement vers l'extérieur lesdits bords d'ouverture (11, 21) et après cela en fléchissant radialement vers l'intérieur lesdits bords d'ouverture.

6. Procédé selon la revendication 5, dans lequel chaque dite partie de bride (12, 22 ; 84 ; 94) est formée en :
bombant ledit tuyau (1, 2 ; 8 ; 9) radialement vers l'extérieur au niveau d'une position intermédiaire dudit tuyau espacée d'un intervalle prédéterminé d'une ouverture (81 ; 91) dudit tuyau, formant de ce fait au moins une partie bombée (82 ; 92 ; 92A, 92B) présentant une forme de crête en section transversale ; et
écraser la au moins une partie bombée dans la direction longitudinale du tuyau de manière à superposer les deux pentes (821, 822 ; 921, 922) de chaque partie bombée l'une sur l'autre.
